# FASCICULE DE BREVET EUROPEEN

(11) **EP 0 902 359 B1**
(45) Date de publication et mention de la délivrance du brevet: **28.02.2001**
(21) Numéro de dépôt: 98470020.3
(22) Date de dépôt: 26.08.1998
(51) Int. Cl.: G06F 7/72, G06F 7/52

(54) **Procédé et dispositif de production d'une division entière avec un coprocesseur d'arithmétique modulaire**
Verfahren und Anordnung zur Durchführung ganzzahliger Divisionsoperationen mit einem modulo-arithmetischen Koprozessor
Method and apparatus for performing integer division on a modulo arithmetic coprocessor

(30) Priorité: 09.09.1997 FR 9711342
(43) Date de publication de la demande: 17.03.1999
(73) Titulaire: STMicroelectronics SA, 94250 Gentilly Cedex (FR)
(72) Inventeur: Plessier, Bernard, 57000 Metz (FR)
(74) Mandataire: Ballot, Paul Denis Jacques

(56) Documents cités:
- WO-A-97/25668

## Description

L'invention concerne un procédé de production d'une division entière avec un coprocesseur d'arithmétique modulaire. Les coprocesseurs d'arithmétique modulaire sont utilisés dans des circuits de cryptage et/ou de décryptage. L'utilisation de ces coprocesseurs permet d'accélérer de manière considérable les opérations de cryptage et/ou de décryptage utilisant la méthode de Montgomery. De tels systèmes sont très utilisés sur des cartes à puces utilisant notamment le code RSA.

Le code RSA est un codage mathématique où un message binaire M codé sur n bits est traité comme un nombre entier de n bits. Le cryptage et le décryptage sont réalisés par des exponentiations modulaires:
- cryptage: M' = M^{e} mod N,
- décryptage: M = M'^{d} mod N.

M' est le message crypté, codé sur n bits. N est un entier codé sur n bits, tel que N = p * q, p et q étant deux nombres premiers. Les exposants e et d sont deux entiers tels que (e * d) mod Φ(N) = 1, avec Φ(N) = (p - 1) * (q - 1). Un tel code dispose donc de deux clefs, l'une de cryptage appelée clef publique (e et N) et l'autre de décryptage appelée clef secrète (d et N).

Pour trouver la clef secrète à partir de la clef publique, il suffit de réaliser l'opération suivante: d = (1 + K * Φ(N)) / e, K étant un coefficient entier non nul. La sécurité d'un tel code tient dans la complexité des opérations à réaliser. Pour trouver la clef secrète, il faut effectuer la décomposition de N en nombres premiers, ce qui demande un temps d'autant plus élevé que les nombres p et q sont grands (en pratique p et q sont codés sur quelques centaines de bits). En effet, il faut tester successivement la divisibilité de N par tous les nombres entiers codé sur 2 à n / 2 bits.

Chercher la clef secrète à partir de la clef publique est tout à fait possible à condition de passer plusieurs centaines d'années. Néanmoins, certaines utilisations de codes RSA peuvent nécessiter des changements de clefs qui font appels à un calcul de clefs. De tels calculs font appel à des divisions sur des nombres de grandes dimensions.

Dans les cartes à puces, les circuits de cryptage font appel à une architecture de type microprocesseur - coprocesseur. Le microprocesseur est d'un type classique 8 ou 16 bits. Le coprocesseur est un coprocesseur d'arithmétique modulaire spécialement adapté pour réaliser des calculs sur des nombres de grande taille. Il est connu par le document EP-A-0 601 907 un coprocesseur d'arithmétique modulaire utilisant une architecture série particulièrement bien adaptée aux cartes à puces. Ce coprocesseur particulièrement bien adapté a servi de base à de nombreuses améliorations et en particulier à la demande WO-A-9725668.

Cette demande dévoile une réalisation possible d'une division entière sur le coprocesseur d'arithmétique modulaire. Cependant la division réalisée nécessite une inversion de bits sur des mots de grandes tailles pour le dividende et le quotient. L'inversion est réalisé actuellement par le processeur qui travaille conjointement avec le coprocesseur et demande d'une part un espace mémoire important et d'autre part un temps de calcul important.

L'invention propose de résoudre les problèmes posés par l'art antérieur. L'invention propose un nouveau circuit de division intégrable dans le coprocesseur d'arithmétique modulaire dévoilé dans le document EP-A-0 601 907 pour lequel il est prévu une inversion de données de manière interne.

L'invention a pour objet un procédé de mise en oeuvre d'une division entière dans un coprocesseur d'arithmétique modulaire, tel que défini dans la revendication 1. Des modes de réalisation particuliers de l'invention sont également spécifiés dans les revendications dépendantes. Un autre aspect de l'invention est un coprocesseur d'arithmétique modulaire tel que défini dans la revendication 8.

Préférentiellement, le registre de dividende effectue Bt fois un décalage de Bt - 1 bits en ayant son entrée reliée à sa sortie le contenu dudit registre de dividende étant sortie bit par bit après chacun des décalages de Bt - 1 bits. le registre de quotient effectue Bt fois un décalage de Bt - 1 bits, le premier décalage faisant entrer un bit du quotient S et la sortie du registre de quotient étant reliée à l'entrée du registre de quotient pendant les Bt - 2 décalages suivant.

Dans une variante, les registres de dividende et de quotient reçoivent successivement respectivement des mots de Bt bits du dividende A et les a - n + 1 mots de Bt bits du quotient S, chacun des mots étant d'un poids inférieur au mot précédemment reçu. Dans une autre variante, plusieurs registres de dividende et de quotient de Bt bits reçoivent chacun respectivement un mot de Bt bits du dividende A et du quotient S.

Préférentiellement, le coprocesseur comporte un multiplexeur de dividende et/ou un multiplexeur de quotient pour relier la sortie du registre de dividende et/ou du registre de quotient respectivement à l'entrée du registre de dividende et/ou du registre de quotient afin d'inverser l'ordre de sortie des bits contenus dans le registre de dividende et/ou dans le registre de quotient par rotation du contenu du registre de dividende et/ou registre de quotient.

L'invention sera mieux comprise et d'autre particularités et avantages apparaîtront à la lecture de la description qui va suivre, la description faisant référence aux dessins annexés parmi lesquels:
la figure 1 représente le coprocesseur modulaire modifié selon l'invention,
la figure 2 représente le circuit de division selon l'invention,
la figure 3 représente un registre amélioré pour l'invention.

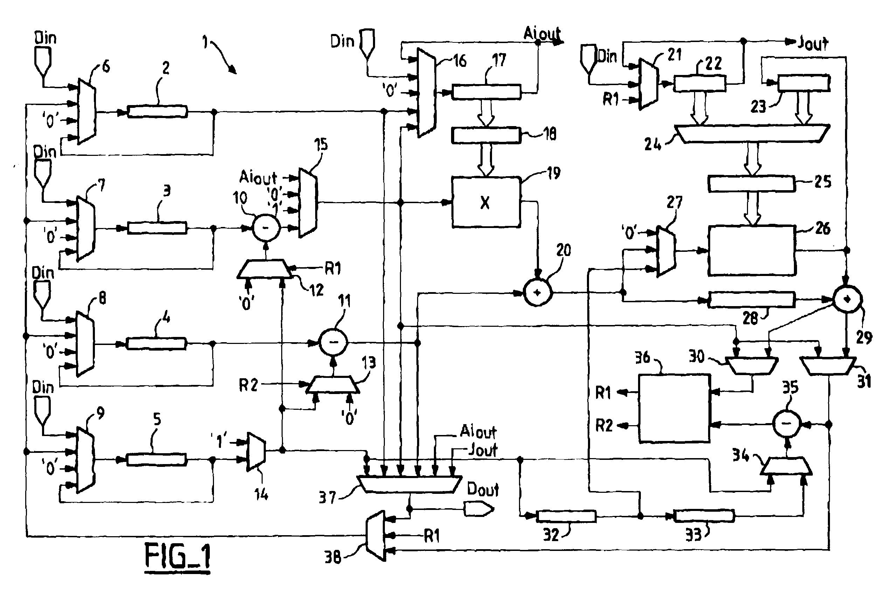

Le coprocesseur 1 de la figure 1 comporte:
- des premier à quatrième registres 2 à 5, lesdits registres 2 à 5 étant des registres à décalages de k fois Bt bits et comportant chacun une entrée série et une sortie série;
- des premier à quatrième multiplexeurs 6 à 9 disposant chacun de première à quatrième entrées et d'une sortie, la sortie de chacun des premier à quatrième multiplexeurs 6 à 9 étant respectivement connectée à l'entrée des premier à quatrième registres 2 à 5, la première entrée de chacun des premier à quatrième multiplexeurs 6 à 9 étant respectivement connectée à la sortie des premier à quatrième registres 2 à 5, la deuxième entrée des dits multiplexeurs 6 à 9 recevant un "0" logique, la troisième entrée des dits multiplexeurs 6 à 9 étant connectée à une borne d'entrée série Din;
- des premier et deuxième circuits de soustractions 10 et 11 disposant chacun de première et deuxième entrées et d'une sortie, la première entrée des premier et deuxième circuits de soustraction 10 et 11 étant respectivement connectée à la sortie des deuxième et troisième registres 3 et 4;
- des cinquième et sixième multiplexeurs 12 et 13 disposant chacun d'une sortie, de première et deuxième entrées de bit et d'une entrée de sélection, la sortie des cinquième et sixième multiplexeurs 12 et 13 étant respectivement connectée à la deuxième entrée des premier et deuxième circuits de soustraction 10 et 11, la première entrée de bit des dits multiplexeurs 12 et 13 recevant un "0" logique;
- un septième multiplexeur 14 disposant de première et deuxième entrées et d'une sortie, la première entrée étant connectée à la sortie du quatrième registre 5, la deuxième entrée recevant un "1" logique, et la sortie étant connectée aux deuxièmes entrées de bit des cinquième et sixième multiplexeurs 12 et 13;
- un huitième multiplexeur 15 disposant de première à quatrième entrées et d'une sortie, la première entrée étant connectée à la sortie du premier circuit de soustraction 10, la deuxième entrée recevant un "1" logique, la troisième entrée recevant un "0" logique;
- un neuvième multiplexeur 16 disposant de première à cinquième entrées et d'une sortie, la première entrée étant connectée à la sortie du huitième multiplexeur 15, la deuxième entrée étant connectée à la sortie du premier registre 2, la troisième entrée recevant un "0" logique, la quatrième entrée étant connectée à la borne d'entrée Din;
- un cinquième registre 17 à décalage de Bt bits disposant d'une entrée série, d'une sortie série et d'une sortie parallèle, l'entrée série étant connectée à la sortie du neuvième multiplexeur 16, la sortie série étant connectée à la cinquième entrée du multiplexeur 16 et à la quatrième entrée du huitième multiplexeur 15;
- un sixième registre 18 de Bt bits disposant d'une entrée parallèle et d'une sortie parallèle, l'entrée parallèle étant connectée à la sortie parallèle du cinquième registre 17;
- un premier circuit de multiplication 19 disposant d'une entrée série, d'une entrée parallèle et d'une sortie série, l'entrée série étant connectée à la sortie du huitième multiplexeur 15, l'entrée parallèle étant connectée à la sortie parallèle du sixième registre 18,
- un premier circuit d'addition 20 disposant de première et deuxième entrées et d'une sortie, la première entrée étant connectée à la sortie du deuxième circuit de soustraction 11, la deuxième entrée étant connectée à la sortie série du circuit de multiplication 19;
- un dixième multiplexeur 21 disposant de première à troisième entrées et d'une sortie, la première entrée étant connectée à la borne d'entrée Din;
- un septième registre 22 à décalage de Bt bits disposant d'une entrée série, d'une sortie série et d'une sortie parallèle, l'entrée série étant connectée à la sortie du dixième multiplexeur 21, la sortie série étant connectée à la deuxième entrée du multiplexeur 21;
- un huitième registre 23 à décalage de Bt bits disposant d'une entrée série et d'une sortie parallèle;
- un onzième multiplexeur 24 disposant de première et deuxième entrées parallèles et d'une sortie parallèle, la première entrée parallèle étant connectée à la sortie parallèle du septième registre 22, la deuxième entrée parallèle étant connectée à la sortie parallèle du huitième registre 23;
- un neuvième registre 25 de Bt bits disposant d'une entrée parallèle et d'une sortie parallèle, l'entrée parallèle étant connectée à la sortie parallèle du onzième multiplexeur 24;
- un deuxième circuit de multiplication 26 disposant d'une entrée série, d'une entrée parallèle et d'une sortie série, l'entrée parallèle étant connectée à la sortie parallèle du neuvième registre 25, la sortie série étant connectée à l'entrée série du huitième registre 23;
- un douzième multiplexeur 27 disposant de première à troisième entrées et d'une sortie, la première entrée recevant un "0" logique, la deuxième entrée étant connectée à la sortie du premier circuit d'addition 20, la sortie étant connectée à l'entrée série du deuxième circuit de multiplication 26;
- un premier circuit retardateur 28 disposant d'une entrée et d'une sortie, l'entrée étant connectée à la sortie du premier circuit d'addition 20;
- un deuxième circuit d'addition 29 disposant de première et deuxième entrées, d'une sortie de résultat et d'une sortie de retenue, la première entrée étant connectée à la sortie série du deuxième circuit de multiplication 26, la deuxième entrée étant connectée à la sortie du premier circuit retardateur 28;
- des treizième et quatorzième multiplexeurs 30 et 31 disposant chacun de première et deuxième entrées et d'une sortie, les premières entrées des dits multiplexeurs 30 et 31 étant connectées à la sortie du huitième multiplexeur 15, la deuxième entrée du treizième multiplexeur 30 étant connectée à la sortie de retenue du deuxième circuit d'addition 29, la deuxième entrée du quatorzième multiplexeur 31 étant connectée à la sortie de résultat du deuxième circuit d'addition 29;
- un deuxième circuit retardateur 32 disposant d'une entrée et d'une sortie, l'entrée étant connectée à la sortie du septième multiplexeur 14, la sortie étant connectée à la troisième entrée du douzième multiplexeur 27;
- un troisième circuit retardateur 33 disposant d'une entrée et d'une sortie, l'entrée étant connectée à la sortie du deuxième circuit retardateur 32;
- un quinzième multiplexeur 34 disposant de première et deuxième entrées et d'une sortie, la première entrée étant connectée à la sortie du septième multiplexeur 14, la deuxième entrée étant connectée à la sortie du troisième circuit retardateur 33;
- un troisième circuit de soustraction 35 disposant de première et deuxième entrées et d'une sortie, la première entrée étant connectée à la sortie du quatorzième multiplexeur 31, la deuxième entrée étant connectée à la sortie du quinzième multiplexeur 34;
- un circuit de détection 36 qui sert à détecter et mémoriser des retenues, le circuit de détection 36 disposant de première et deuxième entrées et de première et deuxième sorties, la première entrée étant connectée à la sortie du treizième multiplexeur 30, la deuxième entrée étant connectée à la sortie du troisième circuit de soustraction 35, la première sortie étant connectée à l'entrée de sélection du cinquième multiplexeur 12 et à la troisième entrée du dixième multiplexeur 21, la deuxième sortie étant connectée à l'entrée de sélection du sixième multiplexeur 13;
- un seizième multiplexeur 37 disposant de première à sixième entrées et d'une sortie, la première entrée étant connectée à la sortie du septième multiplexeur 14, la deuxième entrée étant connectée à la sortie du premier registre 2, la troisième entrée étant connectée à la sortie du huitième multiplexeur 15, la quatrième entrée étant connectée à la sortie du deuxième circuit de soustraction 11, la cinquième entrée étant connectée à la sortie série du cinquième registre 17, la sixième entrée étant connectée à la sortie série du septième registre 22, la sortie étant connectée à une borne de sortie Dout;
- un dix-septième multiplexeur 38 disposant de première à troisième entrées et une sortie, la première entrée étant connectée à la sortie du seizième registre 37, la deuxième entrée étant connectée à la première sortie du circuit de détection 36, la troisième entrée étant connectée à la sortie du quatorzième multiplexeur 31, la sortie étant connectée aux quatrièmes entrées des premier à quatrième multiplexeurs 6 à 9.

Pour ce qui est de la réalisation des différents éléments du coprocesseur 1 ainsi que le fonctionnement de ce coprocesseur 1 pour les calculs modulaires, l'homme du métier peut se reporter aux demandes EP-A-0 601 907, EP-A-0 712 070, EP-A-0 712 071, EP-A-0 712 072, EP-A-0 784 262, EP-A-0 785 503. Les modifications apportées au coprocesseur nécessitent toutefois une légère adaptation du séquencement du coprocesseur par rapport à l'état de la technique, mais ne change pas son fonctionnement global pour les opérations d'arithmétique modulaire.

On rappelle que k et Bt sont des nombres entiers. Bt correspond à la taille de la base de travail utilisée pour la mise en oeuvre des opérations modulaires, et est égal à 32 dans l'état de la technique cité précédemment. On rappelle également que les données sont chargées dans les registres avec le bit de poids le plus fort du coté de l'entrée série et le bit de poids le plus faible du coté de la sortie série.

On remarquera que les modifications portent essentiellement sur les chemins de données qui permettent des combinaisons plus importantes et sur l'ajout d'une sortie série sur les cinquième et septième registres 17 et 22.

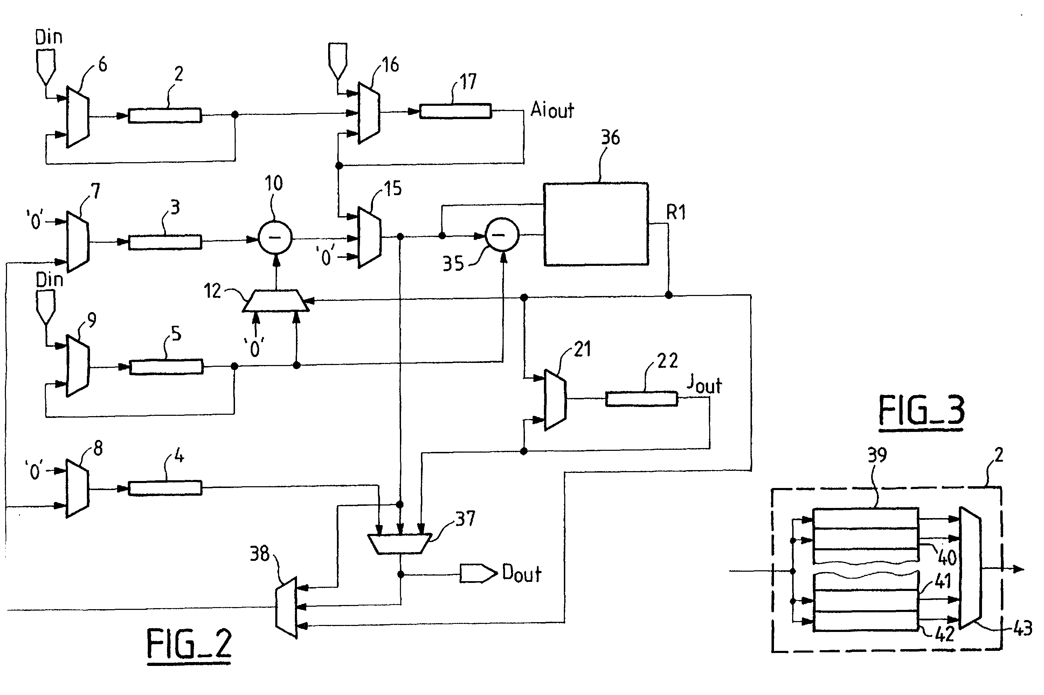

Afin d'expliquer le fonctionnement du coprocesseur 1 pour la réalisation d'une division entière, on fait référence au schéma de la figure 2 qui représente le même coprocesseur 1 de manière simplifiée. Sur ce schéma de la figure 2, seul les éléments, connexions et entrées de multiplexeurs utiles pour la mise en oeuvre d'une division entière ont étés représentés. Les explications qui vont suivre seront plus faciles à comprendre en se reportant à la figure 2 mais peuvent aussi être comprises en se reportant à la figure 1. L'homme du métier pourra à partir des explications réaliser le séquencement adéquate du circuit afin que les opérations décrites soient effectuées.

Considérons la division entière suivante A \ N que l'on peut également écrire A = S * N + B, le signe "\" désignant la division entière, A étant un nombre entier codé sur a * Bt bits correspondant au dividende, N étant un nombre entier non nul codé sur n * Bt bits correspondant au diviseur, S étant un nombre entier codé sur s * Bt bits correspondant au quotient, et B étant un nombre entier codé sur b * Bt bits correspondant au reste. a, b, n et s sont des nombres entiers et déterminent les nombres de mots de Bt bits non nuls qui sont nécessaires pour coder respectivement A, B, N et S. Au début d'une division, A et N sont connus.

Avant d'effectuer une division, le processeur associé au coprocesseur va évaluer les tailles des nombres A et N afin de déterminer les valeurs de a et n. Une fois que a et n sont connus, il convient de comparer a et n. Si on a a < n alors on obtient le résultat évident sans utiliser le coprocesseur 1 qui est B = A et S = 0. Si a ≥ n alors on calcul les tailles de B et S: b = n et s = a - n + 1. On utilise alors le coprocesseur 1 pour réaliser la division.

On considère tout d'abord que les premier à quatrième registres 2 à 5 ont une taille figée de k * Bt bits.

On distinguera tout d'abord un cas où a ≤ k: le procédé de réalisation de la division entière comporte les étapes suivantes:
E0: étape d'initialisation des données: les données A et N sont chargées respectivement dans les premier et quatrième registres 2 et 5, le chargement s'effectuant dans un ordre quelconque par l'intermédiaire de la borne Din et des premier et quatrième multiplexeurs 6 et 9. Initialisation de B et S en chargeant des zéros dans les deuxième et troisième registres 3 et 4 par l'intermédiaire des deuxième et troisième multiplexeurs 7 et 8.
E1: étape d'initialisation du procédé: On effectue a * Bt décalages à droite dans le premier registre 2, le premier registre ayant sa sortie bouclée sur son entrée par l'intermédiaire du premier multiplexeur 6. Pendant les a * Bt décalages on transfert le a^{ième} mot de Bt bits dans le cinquième registre 17 par l'intermédiaire du neuvième multiplexeur 16. Puis on effectue Bt - 1 décalage à droite dans le cinquième registre 17. On initialise les premier et troisième circuits de soustraction 10 et 35 et le circuit de détection 36. La première sortie du circuit de détection affiche un "0" logique pour orienter la sortie du cinquième multiplexeur 12 sur sa première entrée. La deuxième sortie du circuit de détection doit rester pendant toute la durée de calcul à "0" afin que le sixième multiplexeur 13 relie en permanence sa sortie avec sa première entrée. Le septième multiplexeur 14 relie sa sortie à sa première entrée. Les treizième et quatorzième multiplexeurs 30 et 31 relient leurs premières entrées à leurs sorties. Le quinzième multiplexeur 34 relie sa sortie à sa première entrée.
E2: réalisation de la division : on réalise a fois les étapes SE1 à SE6 définies ci-après:
   SE1: on décale de (k - 2) * Bt bits vers la droite le contenu du premier registre 2, son entrée étant reliée à sa sortie par l'intermédiaire du premier multiplexeur 6.
   SE2: on réalise Bt fois les étapes SB1 à SB6 définies ci après:
      SB1: on décale d'un bit vers la droite les deuxième et quatrième registres 3 et 5 en positionnant le huitième multiplexeur 15 afin que le bit présent à la sortie de ce huitième multiplexeur 15 soit le bit présent sur la sortie série du cinquième registre 17. On positionne les deuxième, seizième et dix-septième multiplexeurs 7, 37 et 38 de telle sorte que le bit présent à la sortie du huitième multiplexeur 15 soit chargé dans le deuxième registre 3. parallèlement, on soustrait le bit de poids le plus faible de N au bit sortant du cinquième registre 17 dans le troisième circuit de soustraction 35. Si la première sortie du circuit de détection affiche un "0" logique, on soustrait zéro au bit qui sort du deuxième registre 3 dans le premier circuit de soustraction 10. Si la première sortie du circuit de détection affiche un "1" logique, on soustrait le bit de poids faible de N au bit qui sort du deuxième registre 3 dans le premier circuit de soustraction 10.
      SB2: on décale de k * Bt - 1 bits vers la droite les deuxième et quatrième registres 3 et 5 en positionnant le huitième multiplexeur 15 afin que le bit présent à la sortie de ce huitième multiplexeur 15 soit égal au bit présent sur la sortie du premier circuit de soustraction 10. On positionne les deuxième et dix-septième multiplexeurs 7 et 38 de telle sorte que le bit présent à la sortie du huitième multiplexeur 15 soit chargé dans le deuxième registre 3 à chaque décalage. Lors de chaque décalage, on soustrait les bits de N sortant du quatrième registre 5 aux bits sortant du cinquième registre 17 dans le troisième circuit de soustraction 35. Si la première sortie du circuit de détection affiche un "0" logique, on soustrait des zéros aux bits qui sortent du deuxième registre 3 dans le premier circuit de soustraction 10. Si la première sortie du circuit de détection affiche un "1" logique, on soustrait les bits de N sortant du quatrième registre 5 aux bits qui sortent du deuxième registre 3 dans le premier circuit de soustraction 10.
      SB3: on positionne le huitième multiplexeur 15 afin d'obtenir un "0" logique sur sa sortie. Puis on détecte et on mémorise la retenue présente à la sortie du troisième circuit de soustraction 35 dans le circuit de détection 36. Le circuit de détection 36 affiche sur sa première entrée un "0" logique si il y a une retenue en sortie du troisième circuit de soustraction 35 (ce qui correspond au contenu du deuxième registre inférieur à N) . Le circuit de détection affiche sur sa première entrée un "1" logique si il n'y a pas de retenue en sortie du troisième circuit de soustraction 35 (ce qui correspond au contenu du deuxième registre supérieure à N).
      SB4: on décale de un bit vers la droite le contenu du septième registre 22, le dixième multiplexeur 21 dirigeant sur sa sortie le bit provenant de la première sortie du circuit de détection 36.
      SB5: on décale de Bt - 2 bits vers la droite le contenu du septième registre 22, son entrée étant reliée à sa sortie par l'intermédiaire du dixième multiplexeur 21.
      SB6: on décale de Bt - 1 bits vers la droite le contenu du cinquième registre 17, son entrée étant reliée à sa sortie par l'intermédiaire du neuvième multiplexeur 16.
   SE3: on décale de Bt bits vers la droite le contenu des premier et cinquième registres 2 et 17, l'entrée du premier registre 2 étant reliée à sa sortie par l'intermédiaire du premier multiplexeur 6, et l'entrée du cinquième registre 17 étant reliée à la sortie du premier registre 2 par l'intermédiaire du neuvième multiplexeur 16.
   SE4: on décale de Bt - 1 bits vers la droite le contenu du cinquième registre 17, son entrée étant reliée à sa sortie par l'intermédiaire du neuvième multiplexeur 16.
   SE5: on décale de Bt bits vers la droite le contenu des troisième et septième registres 4 et 22, l'entrée du troisième registre 4 étant reliée à la sortie du septième registre 22 par l'intermédiaire des troisième, seizième et dix-septième multiplexeurs 8, 37 et 38.
   SE6: on décale de (k - 2) * Bt bits vers la droite le contenu du troisième registre 4, son entrée étant reliée à sa sortie par l'intermédiaire du troisième multiplexeur 8.
E3: on initialise le circuit de détection 36 pour positionner le cinquième multiplexeur 12 sur sa première entrée.
E4: on sort le reste B de la division en décalant de b * Bt bits vers la droite le contenu du deuxième registre 3, la sortie du deuxième registre 3 étant reliée à la borne de sortie Dout par l'intermédiaire du premier circuit de soustraction 10 et des huitième et seizième multiplexeurs 15 et 37.
E5: on décale de Bt bits vers la droite le contenu du troisième registre 4, son entrée étant reliée à sa sortie par l'intermédiaire du troisième multiplexeur 8.
E6: on sort le quotient S de la division en décalant de (a - n + 1) * Bt bits le contenu du troisième registre 4, la sortie du troisième registre 4 étant reliée à la borne de sortie par l'intermédiaire du seizième multiplexeur 37.

L'homme du métier peut effectuer les différentes étapes dans l'ordre indiqué. Toutefois, il est préférable afin de diminuer le temps de calcul de superposer certaines étapes: les étapes SE1 et SE2 peuvent se dérouler simultanément; l'étape SB6 peut se dérouler pendant l'étape SB2 ou SB3; les étapes SB4 et SB5 peuvent se dérouler pendant le déroulement des étapes SB1 à SB3 qui correspondent à l'itération suivante; l'étape SE3 peut se dérouler pendant l'étape SE2 après avoir réaliser l'étape SE1; l'étape SE4 peut se dérouler pendant l'étape SE2 après avoir réaliser l'étape SE3; l'étape SE6 peut se dérouler pendant l'étape SE2 de l'itération suivante; l'étape E5 peut se dérouler pendant l'étape E4.

De plus, les étapes E0, E3, E4 et E6 ne sont pas obligatoires: les données peuvent déjà être présentes dans le coprocesseur 1 et l'initialisation de B et S dans les deuxième et troisième registres 3 et 4 peut se dérouler pendant la première itération de E2, rendant l'étape E0 superflue; le quotient S ou le reste peuvent servir dans le coprocesseur immédiatement après la réalisation de la division rendant les étapes E3, E4 et E6 de sortie des résultats superflues.

La réalisation de la division qui correspond à la réalisation des étapes E1, E2 et E5 (en superposant les étapes) utilise Bt * (a * (k * Bt + 4 + x) + k) - 1 cycles d'horloge, x étant un nombre de cycles de synchronisation dû à la gestion du coprocesseur.

Des améliorations sont possibles à partir de ce procédé. Il est possible d'améliorer la capacité de traitement ainsi que la vitesse de traitement du procédé en changeant uniquement certains paramètres. En effet, avec le procédé précédemment défini, l'étape E2 réalise une boucle où sont répétées a fois les étapes SE1 à SE6. Les (n - 1) premières itérations de cette boucle de l'étape E2 servent uniquement à transférer les n - 1 mots de poids fort de A dans le deuxième registre puisqu'il est évident que le contenu du deuxième registre est inférieur à N pendant ces n - 1 premières itérations. Une amélioration consiste à remplacer les étapes E0, E1 et E2 du procédé par respectivement les étapes E0', E1' et E2' suivantes:
E0': étape d'initialisation des données: les n - 1 mots de poids le plus fort du dividende A sont chargés dans le deuxième registre 3 en mots de poids faible, les k - n + 1 mots de poids fort du deuxième registre 3 sont chargés par des "0" logiques, les a - n + 1 mots de poids faible du dividende A sont chargés dans le premier registre 2 en mots de poids faible, et le diviseur N est chargé dans le quatrième registre 5, le chargement s'effectuant dans un ordre quelconque par l'intermédiaire de la borne Din et des premier, deuxième et quatrième multiplexeurs 6, 7 et 9.
E1': étape d'initialisation du procédé: On effectue (a - n + 1) * Et décalages à droite dans le premier registre 2, le premier registre ayant sa sortie bouclée sur son entrée par l'intermédiaire du premier multiplexeur 6. Pendant les (a - n + 1) * Bt décalages on transfert le (a - n + 1)^{ième} mot de Bt bits dans le cinquième registre 17 par l'intermédiaire du neuvième multiplexeur 16. Puis on effectue Bt - 1 décalage à droite dans le cinquième registre 17. On initialise les premier et troisième circuits de soustraction 10 et 35 et le circuit de détection 36. La première sortie du circuit de détection affiche un "0" logique pour orienter la sortie du cinquième multiplexeur 12 sur sa première entrée. La deuxième sortie du circuit de détection doit rester pendant toute la durée de calcul à "0" afin que le sixième multiplexeur 13 relie en permanence sa sortie avec sa première entrée. Le septième multiplexeur 14 relie sa sortie à sa première entrée. les treizième et quatorzième multiplexeurs 30 et 31 relient leurs premières entrées à leurs sorties. Le quinzième multiplexeur 34 relie sa sortie à sa première entrée.
E2': réalisation de la division : on réalise a - n + 1 fois les étapes SE1 à SE6.

Les étapes SE1 à SE6 restent inchangées. L'homme du métier remarquera que l'on a également supprimé l'initialisation du troisième registre 4 qui n'est pas indispensable au bon fonctionnement du procédé de division. Les modifications apportées dans les étapes E0' à E2' permettent de pouvoir traiter des divisions pour des nombres A et N tels que n ≤ k et a ≤ k + n - 1. Le temps de traitement de la division (étapes El', E2' et E5) est alors égal à Bt * ((a - n + 1) * (k * Bt + 4 + x) + k) - 1 cycles d'horloge.

Pour pouvoir traiter des dividendes de taille supérieure à k - n + 1, il est possible de charger successivement les a - n mots de A directement dans le cinquième registre 17. les étapes E0, E1, E2, et SE3 peuvent être respectivement remplacées par les étapes E0", E1", E2" et SE3" suivantes:
E0": étape d'initialisation des données: les n - 1 mots de poids le plus fort du dividende A sont chargés dans le deuxième registre 3 en mots de poids faible, les k - n + 1 mots de poids fort du deuxième registre 3 sont chargés par des "0" logiques, le (a - n + 1)^{ième} mot du dividende A est chargé dans le cinquième registre 17, et le diviseur N est chargé dans le quatrième registre 5, le chargement s'effectuant dans un ordre quelconque par l'intermédiaire de la borne Din et des deuxième, quatrième et neuvième multiplexeurs 7, 9 et 16.
E1": étape d'initialisation du procédé: On effectue Bt - 1 décalages à droite dans le cinquième registre 17. On initialise les premier et troisième circuits de soustraction 10 et 35 et le circuit de détection 36. La première sortie du circuit de détection affiche un "0" logique pour orienter la sortie du cinquième multiplexeur 12 sur sa première entrée. La deuxième sortie du circuit de détection doit rester pendant toute la durée de calcul à "0" afin que le sixième multiplexeur 13 relie en permanence sa sortie avec sa première entrée. Le septième multiplexeur 14 relie sa sortie à sa première entrée. les treizième et quatorzième multiplexeurs 30 et 31 relient leurs premières entrées à leurs sorties. Le quinzième multiplexeur 34 relie sa sortie à sa première entrée.
E2": réalisation de la division : on réalise a - n + 1 fois les étapes SE1, SE2, SE3" et SE4 à SE6, 1 étant un indice variant de 1 à a - n + 1 qui s'incrémente lors de chaque itération de l'étape E2".
SE3": on charge le (a - n + 2 - 1)^{ième} mot du dividende A dans le cinquième registre 17 par l'intermédiaire du neuvième multiplexeur 16 et de la borne d'entrée Din.

La capacité de traitement du dispositif devient alors dépendante de la taille du diviseur N et de la taille du quotient S. Pour rendre la capacité de traitement indépendante du quotient S, on peut sortir les mots du quotient S au fur et à mesure du calcul. Pour cela, on supprime les étapes SE1, E5 et E6 et on remplace les étapes SE5 et SE6 par une unique étape SE5" suivante:
SE5": on décale de Bt bits vers la droite le contenu du septième registre 22, la sortie du septième registre 22 étant reliée à la borne de sortie par l'intermédiaire du seizième multiplexeur 37.

Le temps de calcul devient, avec la gestion externe du dividende A et du quotient S, égal à Bt * ((a - n + 1) * (k * Bt + 3 + x) + 1) - 1 cycles d'horloge.

Comme il a déjà été expliquer dans les différentes demandes de brevet citées précédemment, il est possible d'utiliser des registres de taille variable, par exemple les registres à taille variable dévoilés dans la figure 3 de la demande EP-A-0 784 262. Les registres de taille variable permettent d'utiliser des premier à quatrième registres 2 à 5 dont la taille va être adaptée à la donnée contenue. Ces registres à taille variable sont combinables avec toutes les étapes du procédé énoncé et toutes les améliorations citées. Il convient pour cela de remplacer le facteur k par a ou a - n + 1 pour tout ce qui ce rapporte au premier registre 2, ou de remplacer k par n pour tout ce qui se rapporte aux deuxième et quatrième registres 3 et 5, ou de remplacer k par a - n + 1 pour tout ce qui se rapporte au troisième registre 4.

L'amélioration apportée par les registres de taille variable se traduit par des temps de mise en oeuvre de:
Bt * (a * (n * Bt + 5 + x) + 1 - n) - 1 cycles d'horloge pour le procédé de base;
Bt * (a - n + 1) * (n * Bt + 5 + x) - 1 cycles d'horloges pour le procédé utilisant les étapes E0', E1' et E2'; et
Bt * ((a - n + 1) * (n * Bt + 3 + x) + 1) - 1 cycles d'horloge pour le procédé utilisant les étapes E0", E1", E2", SE3" et SE5".

La figure 3 représente un registre à décalage de taille variable particulièrement intéressant dans la mise en oeuvre de l'invention. Le registre à décalage de la figure 3 peut être utilisé pour l'un quelconque des premier à quatrième registres 2 à 5.

Ainsi le premier registre 2 peut être composé de k registres élémentaires 39 à 42 à décalage de Bt bits ayant chacun une entrée série et une sortie série, toutes les entrées des registres élémentaires 39 à 42 étant connectées ensembles afin de former l'entrée du premier registre 2. Un multiplexeur de sortie 43 disposant de k entrées et d'une sortie, chacune des entrées étant connectée respectivement à la sortie de chacun des registres élémentaires 39 à 42, la sortie du multiplexeur de sortie 43 formant la sortie du premier registre 2.

Le premier registre 2 de la figure 3 a besoin de signaux de commande qui lui indiquent lequel des registres élémentaires 39 à 42 est sélectionné pour effectuer un décalage à droite rendant l'entrée du registre élémentaire sélectionné valide et/ou reliant la sortie du registre élémentaire sélectionné à la sortie du premier registre 2. Le premier registre 2 permet d'avoir accès, de manière indépendante, à chacun des mots de Bt bits de la donnée contenu dans le premier registre 2. Il est de plus possible de sélectionner deux registres élémentaires 39 à 42 simultanément en rendant valide l'entrée de l'un et en reliant la sortie de l'autre à la sortie du premier registre 2.

L'utilisation du registre de la figure 3 présente comme avantage de réduire la consommation du coprocesseur 1 si il est utilisé pour chacun des premier à quatrième registres 2 à 5. en effet lorsque l'on désire décaler un mot de k * Bt bits, par exemple dans le deuxième registre 3, on aura un décalage réel d'au plus deux des registres élémentaires 39 à 42 ce qui diminue de k/2 fois le nombre de décalage dans le deuxième registre 3, diminuant ainsi de k/2 fois la consommation du deuxième registre 3.

Dans le procédé de division de l'invention, le registre de la figure 3 présente un avantage supplémentaire. Les premier et troisième registres 2 et 4 étant amenés a fournir et recevoir leur contenu par mot de k bits, les cinquième et septième registres 17 et 22 servant à inverser l'ordre des bits de chacun des mots de Bt bits, l'utilisation du registre de la figure 3 permet d'éviter d'avoir à décaler systématiquement le contenu des premier et troisième registres. De plus l'utilisation des cinquième et septième registres 17 et 22 n'est plus obligatoire car il est possible de faire effectuer l'inversion des mots de Bt bits à l'aide des registres élémentaire 39 à 42 des premier et troisième registres 2 et 4 (pour cela une connexion supplémentaire est nécessaire entre la sortie du premier registre 2 et le huitième multiplexeur 15).

Une variante consiste à utiliser des cinquième et septième registres 17 et 22 capables d'effectuer des décalages dans les deux sens, l'entrée de ces cinquième et septième registres 17 et 22 devenant une entrée/sortie, l'inversion des bits se faisant sans rotation de la totalité du contenu de ces registres. Toutefois, une telle solution demande des adaptations plus importantes en terme de surface de puce pour un résultat équivalent.

Une autre variante peut consister à utiliser le septième registre 17 sans utiliser le premier registre 2. Le chargement du dividende A se fait alors mot par mot pendant le déroulement d'une division. L'avantage d'un tel dispositif est de pouvoir réaliser une division avec les circuits de l'état de la technique qui possèdent uniquement trois registre de k * Bt bits sans être obliger d'ajouter un quatrième registre de k * Bt bits. Il est préférable dans une telle variante de transformer le sixième registre 18 en registre à décalage afin qu'il remplisse le rôle du septième registre 17 pour l'inversion des bits, le septième registre 17 servant alors de registre tampon pour permettre plus de souplesse lors du chargement de donnée.

D'autres variantes de réalisation sont possibles, il est par exemple possible d'utiliser les différentes variantes présentées précédemment de manière combinée.

Il est également possible que l'homme du métier ait besoin d'inverser uniquement les bits du quotient S ou uniquement les bits du dividende de telle sorte que les inversions de bits dans les premier et/ou cinquième registres 2 et/ou 17 ne soient pas à faire si l'on dispose d'un dividende déjà inversé ou que les inversions de bits dans les troisième et/ou septième registres 4 et/ou 22 ne soient pas à faire si l'on désire utiliser le quotient S sous une forme inversé.

Bien évidemment, l'homme du métier pour utiliser une base de travail Bt et des premier à quatrième registres 2 à 5 de taille quelconque.

## Revendications

1. Procédé de mise en oeuvre d'une division entière dans un coprocesseur d'arithmétique modulaire (1) destiné à effectuer des calculs modulaires selon la méthode de Montgomery, procédé selon lequel on divise un dividende A, codé sur a mots de Bt bits, divisé par un diviseur N, codé sur n mots de Bt bits; pour obtenir un quotient S, codé sur a - n + 1 mots de Bt bits, le procédé étant caractérisé en ce qu'au cours de la division au moins un desdits mots de Bt bits du dividende A ou du quotient S est entré bit par bit dans un registre (17, 22, 39 à 42) à décalage de Bt bits, et ledit mot est entré dans ledit registre (17, 22, 39 à 42) dans un premier ordre et est ressorti dudit registre (17, 22, 39 à 42) bit par bit dans un ordre inverse du premier ordre.

2. Procédé selon la revendication 1, caractérisé en ce que ledit mot est un mot de Bt bits du dividende A, en ce que ledit registre est un registre de dividende (17, 39 à 42), et
en ce que le registre de dividende (17, 39 à 42) effectue Bt fois un décalage de Bt - 1 bits en ayant son entrée reliée à sa sortie le contenu dudit registre de dividende (17, 39 à 42) étant sortie bit par bit après chacun des décalages de Bt - 1 bits.

3. Procédé selon la revendication 2, caractérisé en ce que le registre de dividende (17) reçoit successivement des mots de Bt bits du dividende A, chacun des mots étant d'un poids inférieur au mot précédemment reçu.

4. Procédé selon la revendication 2, caractérisé en ce que plusieurs registres de dividende (39 à 42) de Bt bits reçoivent chacun un mot de Bt bits du dividende A.

5. Procédé selon la revendication 1, caractérisé en ce que ledit mot est un mot de Bt bits du quotient S, en ce que ledit registre est un registre de quotient (22, 39 à 42) de Bt bits, et
en ce que le registre de quotient (22, 39 à 42) effectue Bt fois un décalage de Bt - 1 bits, le premier décalage faisant entrer un bit du quotient S et la sortie du registre de quotient (22, 39 à 42) étant reliée à l'entrée du registre de quotient (22, 39 à 42) pendant les Bt - 2 décalages suivant.

6. Procédé selon la revendication 5, caractérisé en ce que le registre de quotient (22) reçoit successivement les a - n + 1 mots de Bt bits du quotient S chacun des mots étant d'un poids inférieur au mot précédemment reçu.

7. Procédé selon la revendication 5, caractérisé en ce que plusieurs registres de quotient (39 à 42) de Bt bits reçoivent chacun un mot de Bt bits du quotient S.

8. Coprocesseur d'arithmétique modulaire (1) destiné à effectuer des calculs modulaires selon la méthode de Montgomery comportant un circuit de division pour réaliser une division entière, d'un dividende A, codé sur a mots de Bt bits, par un diviseur N, codé sur n mots de Bt bits, afin d'obtenir un quotient S, codé sur a -n + 1 mots de Bt bits, caractérisé en ce que le circuit de division comporte au moins un registre (17, 22, 39 à 42) à décalage de Bt bits agencé pour contenir au moins un desdits mots du dividende A ou du quotient S, y rentrer ledit mot dans un premier ordre et le ressortir dans un ordre inverse au premier ordre.

9. Coprocesseur selon la revendication 8, caractérisé en ce que ledit registre à décalage est un registre de dividende (17, 39 à 42), et
en ce que le coprocesseur comporte un multiplexeur de dividende (6, 16) pour relier la sortie du registre de dividende (17, 39 à 42) à l'entrée du registre de dividende (17, 39 à 42) afin d'inverser l'ordre de sortie des bits contenus dans le registre de dividende (17, 39 à 42) par rotation du contenu du registre de dividende (17, 39 à 42).

10. Coprocesseur d'arithmétique modulaire (1) selon la revendication 8, caractérisé en ce que ledit registre est un registre de quotient (22, 39 à 42), et
en ce que le coprocesseur comporte un multiplexeur de quotient (8, 21) pour relier la sortie du registre de quotient (22, 39 à 42) à l'entrée du registre de quotient (22, 39 à 42) afin d'inverser l'ordre d'entrée des bits contenus dans le registre de quotient (22, 39 à 42) par rotation du contenu du registre de quotient (22, 39 à 42).

## Claims

1. Method of implementing an integer division in a modular arithmetic coprocessor (1) intended to perform modular calculations according to the Montgomery method, a method according to which a dividend A, coded in a words of Bt bits, divided by a divisor N, coded in n words of Bt bits, is divided in order to obtain a quotient S, coded in a - n + 1 words of Bt bits, the method being characterised in that, during the division, at least one of the said words of Bt bits of the dividend A or of the quotient S is entered bitwise into a shift register (17, 22, 39 to 42) of Bt bits, and the said word is entered into the said register (17, 22, 39 to 42) in a first order and is re-output from the said register (17, 22, 39 to 42) bitwise in an order which is the reverse of the first order.

2. Method according to Claim 1, characterised in that the said word is a word of Bt bits of the dividend A, in that the said register is a dividend register (17, 39 to 42), and
in that the dividend register (17, 39 to 42) performs a shift of Bt - 1 bits Bt times whilst having its input connected to its output, the content of the said dividend register (17, 39 to 42) being output bitwise after each of the shifts of Bt - 1 bits.

3. Method according to Claim 2, characterised in that the dividend register (17) successively receives words of Bt bits of the dividend A, each of the words having a significance less than the previously received word.

4. Method according to Claim 2, characterised in that several dividend registers (39 to 42) of Bt bits each receive a word of Bt bits of the dividend A.

5. Method according to Claim 1, characterised in that the said word is a word of Bt bits of the quotient S, in that the said register is a quotient register (22, 39 to 42) of Bt bits, and
in that the quotient register (22, 39 to 42) performs a shift of Bt - 1 bits Bt times, the first shift causing a bit of the quotient S to be entered, and the output of the quotient register (22, 39 to 42) being connected to the input of the quotient register (22, 39 to 42) during the following Bt - 2 shifts.

6. Method according to Claim 5, characterised in that the quotient register (22) successively receives the a - n + 1 words of Bt bits of the quotient S, each of the words having a lower significance than the previously received word.

7. Method according to Claim 5, characterised in that several quotient registers (39 to 42) of Bt bits each receive a word of Bt bits of the quotient S.

8. Modular arithmetic coprocessor (1) intended to perform modular calculations according to the Montgomery method, having a division circuit for performing an integer division of a dividend A, coded in a words of Bt bits, by a divisor N, coded in n words of Bt bits, in order to obtain a quotient S, coded in a - n + 1 words of Bt bits, characterised in that the division circuit has at least one shift register (17, 22, 39 to 42) of Bt bits arranged so as to contain at least one of the said words of the dividend A or of the quotient S, enter the said word therein in a first order and re-output it in an order which is the reverse of the first order.

9. Coprocessor according to Claim 8, characterised in that the said shift register is a dividend register (17, 39 to 42), and
in that the coprocessor has a dividend multiplexer (6, 16) for connecting the output of the dividend register (17, 39 to 42) to the input of the dividend register (17, 39 to 42) in order to reverse the output order of the bits contained in the dividend register (17, 39 to 42) by rotation of the content of the dividend register (17, 39 to 42).

10. Modular arithmetic coprocessor (1) according to Claim 8, characterised in that the said register is a quotient register (22, 39 to 42) and
in that the coprocessor has a quotient multiplexer (8, 21) for connecting the output of the quotient register (22, 39 to 42) to the input of the quotient register (22, 39 to 42) in order to reverse the order of inputting of the bits contained in the quotient register (22, 39 to 42) by rotation of the content of the quotient register (22, 39 to 42).

## Patentansprüche

1. Verfahren zum Durchführen einer ganzzahligen Division in einem moduloarithmetischen Koprozessor (1) für Modulo-Berechnungen nach dem Montgomery-Verfahren, wobei man einen Zähler A aus Worten mit Bt Bits durch einen Nenner N aus n Worten mit Bt Bits dividiert, um einen Quotienten S mit a - n + 1 Worten mit Bt Bits zu erhalten,
dadurch gekennzeichnet, daß
im Verlauf der Division wenigstens eines der Worte mit Bt Bits des Zählers A oder des Quotienten S Bit für Bit in ein Register (17, 22, 39 bis 42) für das Verschieben von Bt Bits geladen wird und das Wort in das Register (17, 22, 39 bis 42) in einer ersten Reihenfolge eingegeben wird und Bit für Bit von dem Register (17, 22, 39 bis 42) in umgekehrter Reihenfolge gegenüber der ersten Reihenfolge ausgegeben wird.

2. Verfahren nach Anspruch 1, dadurch gekennzeichnet, daß das Wort ein Wort mit Bt Bits des Zählers A ist, daß das Register ein Zähler-Register ist (17, 39 bis 42), und
daß das Zähler-Register (17, 39 bis 42) Bt-mal eine Verschiebung um Bt - 1 Bits durchführt, wobei sein Eingang mit seinem Ausgang verbunden ist, wobei der Inhalt des Zähler-Registers (17, 39 bis 42) Bit für Bit nach jeder der Verschiebungen um Bt - 1 Bits ausgegeben wird .

3. Verfahren nach Anspruch 2, dadurch gekennzeichnet, daß das Zähler-Register (17) sukzessive Worte mit Bt Bits des Zählers A einliest, wobei jedes der Worte von geringem Gewicht als das vorher empfangene Wort ist.

4. Verfahren nach Anspruch 2, dadurch gekennzeichnet, daß mehrere Zähler-Register (39 bis 42) von Bt Bits jeweils ein Wort von Bt Bits des Zählers A einlesen.

5. Verfahren nach Anspruch 1, dadurch gekennzeichnet, daß das Wort ein Wort mit Bt Bits des Quotienten S ist, daß das Register ein Quotienten-Register (22, 39 bis 42) mit Bt Bits ist, und daß das Quotienten-Register (22, 39 bis 42) Bt-mal eine Verschiebung von Bt - 1 Bits durchführt, wobei die erste Verschiebung das Eingeben eines Bits des Quotienten S bewirkt und der Ausgang des Quotienten-Registers (22, 39 bis 42) mit dem Eingang des Quotienten-Registers (22, 39 bis 42) während der folgenden Bt - 2 Verschiebungen verbunden ist.

6. Verfahren nach Anspruch 5, dadurch gekennzeichnet, daß das Quotienten-Register (22) sukzessive a - n + 1 Worte mit Bt Bits des Quotienten S einliest, wobei jedes der Worte ein niedriges Gewicht gegenüber dem vorher eingelesenen Wort hat.

7. Verfahren nach Anspruch 5; dadurch gekennzeichnet, daß mehrere Quotienten-Register (39 bis 42) mit Bt Bits jeweils ein Wort mit Bt Bits des Quotienten S einlesen.

8. Modulo-arithmetischer Koprozessor (1) zum Durchführen von Modulo-Berechnungen nach dem Montgomery-Verfahren mit einem Divisionsschaltkreis für das Durchführen einer ganzzahligen Division eines Zählers A mit a Worten mit Bt Bits durch einen Nenner N mit n Worten mit Bt Bits, um einen Quotienten S mit a - n + 1 Worten mit Bt Bits zu erhalten, dadurch gekennzeichnet, daß der Divisionsschaltkreis wenigstens ein Register (17, 22, 39 bis 42) für das Verschieben von Bt Bits umfaßt, der dazu ausgelegt ist, wenigstens eines der Worte des Zählers oder des Quotienten S zu enthalten, dort das Wort in einer ersten Reihenfolge einzulesen und es in einer gegenüber der ersten Reihenfolge invertierten Reihenfolge wieder auszugeben.

9. Koprozessor nach Anspruch 8, dadurch gekennzeichnet, daß das Schieberegister ein Zähler-Register (17, 39 bis 42) ist und daß der Koprozessor einen Zähler-Multiplexer (6, 16) für das Verbinden des Ausgangs des Zähler-Registers (17, 39 bis 42) mit dem Eingang des Zähler-Registers (17, 39 bis 42) umfaßt, um die Reihenfolge bei der Ausgabe der Bits in dem Zähler-Register (17, 39 bis 42) durch Rotation des Inhalts des Zähler-Registers (17, 39 bis 42) zu invertieren.

10. Modulo-arithmetischer Koprozessor (1) nach Anspruch 8, dadurch gekennzeichnet, daß das Register ein Quotienten-Register (22, 39 bis 42) ist, und daß der Koprozessor einen Quotienten-Multiplexer (8, 21) zum Verbinden des Ausgangs des Quotienten-Registers (22, 39 bis 42) mit dem Eingang des Quotienten-Registers (22, 39 bis 42) umfaßt, um die Reihenfolge beim Eingeben von Bits in das Quotienten-Register (22, 39 bis 42) durch Rotation des Inhalts des Quotienten-Registers (22, 39 bis 42) zu invertieren.
